# DEMANDE DE BREVET EUROPEEN

(11) **EP 0 965 920 A1**
(43) Date de publication de la demande: **22.12.1999**
(21) Numéro de dépôt: 99401480.1
(22) Date de dépôt: 16.06.1999
(51) Int. Cl.: G06F 9/46

(54) **Procédé de transformation et d'acheminement de données entre des serveurs d'agents présents sur des machines et un serveur d'agent central présent sur une autre machine**

(30) Priorité: 18.06.1998 FR 9807718
(71) Demandeur: BULL S.A., 78430 Louveciennes (FR); Inria Institut National de Recherche en Informatique et en Automatique, 78153 Le Chesnay Cedex (FR)
(72) Inventeur: Freyssinet, André, 38640 Claix (FR); Herrmann, Marc, 38960 Saint Etienne de Crossey (FR); Lacourte, Serge, 38400 Saint Martin d'Heres (FR)
(74) Mandataire: Debay, Yves

(57) **Abrégé**

La présente invention concerne un procédé de transformation et d'acheminement de données entre des serveurs d'agents présents sur des machines et un serveur d'agent central présent sur une autre machine.

Ce procédé de transformation et d'acheminement est caractérisé en ce qu'un serveur d'agents comprend des agents (5) autonomes qui communiquent par notifications, une couche de stockage (Storage) et une machine à agents comportant un moteur d'exécution (1) (Engine), un canal (2) de communication (Channel) et deux queues de message pour les notifications, une queue locale (3) (mqln) et une queue externe (4) (mqOut), et en ce que le moteur d'exécution (1) prend une notification dans la queue locale (3) (mqln), détermine et charge pour chaque notification l'agent correspondant, fait réagir l'agent à la notification, l'agent pouvant alors changer son état et/ou émettre des notifications vers le canal (2) de communication qui les mémorise dans la queue locale (3) (mqln) si elles sont adressées à un agent local et dans la queue externe (4) (mqOut) si elles s'adressent à un agent d'un autre serveur.

## Description

L'invention concerne un procédé de transformation et d'acheminement de données entre des serveurs d'agents présents sur des machines et un serveur d'agent central présent sur une autre machine.

Plus particulièrement, l'invention concerne un procédé de transformation et d'acheminement de données entre des serveurs d'agents présents sur des machines de sites de production et un serveur d'agent central présent sur la machine de la base décisionnelle, tel que dans le cadre de la concentration centralisée des données, appelée aussi Datawarehouse.

Le Datawarehouse est un concept informatique visant à regrouper dans une unité centralisée, accessible par un réseau, toutes les informations disponibles dans une entreprise. Le Datawarehouse permet une meilleure diffusion de l'information en présentant les informations non plus sous une forme brute mais de manière directement utilisable par le demandeur ou client (les dirigeants de l'entreprise par exemple). Le Datawarehouse correspond donc à un ou plusieurs sites de production de l'entreprise avec des bases de données, et à côté une base décisionnelle qui peut récupérer les informations sous une nouvelle forme (mettre en concordance des informations qui peuvent être représentées de manières différentes, transformer ou enlever des informations...). Sur chaque site, il existe un processus de transformation et d'acheminement des données pour remplir cette base décisionnelle. Le matériel et les logiciels utilisés peuvent être différents d'un site à l'autre. Dans l'art antérieur, les machines de chaque site nécessitent un logiciel particulier pour interpréter et transformer les informations de ou des bases de données du site. Un logiciel doit donc être réécrit pour chaque site. Les processus existants actuellement utilisent la distribution sur les différentes machines d'un processus synchrone d'appel de procédure à distance (RPC : Remote Procedure Call). Les différentes opérations élémentaires (étapes d'extraction, de transfert, de chargement...) sont mélangées dans un algorithme.

Le but de l'invention est de restructurer le logiciel de transformation et d'acheminement des données de manière à le rendre facilement extensible et à le rendre ouvert.

Ce but est atteint par le fait que le procédé de transformation et d'acheminement de données entre des serveurs d'agents présents sur les machines et un serveur d'agent central présent sur une autre machine se caractérise en ce qu'un serveur d'agents comprend des agents autonomes qui communiquent par notifications, une couche de stockage (Storage) et une machine à agents comportant un moteur d'exécution (Engine), un canal de communication (Channel) et deux queues de message pour les notifications, une queue locale (mqln) et une queue externe (mqOut), et en ce que le moteur d'exécution prend une notification dans la queue locale (mqln), détermine et charge pour chaque notification l'agent correspondant, fait réagir l'agent à la notification, l'agent pouvant alors changer son état et/ou émettre des notifications vers le canal de communication qui les mémorise dans la queue locale (mqln) si elles sont adressées à un agent local et dans la queue externe (mqOut) si elles s'adressent à un agent d'un autre serveur.

Selon une autre particularité, le moteur d'exécution (Engine) de la machine à agents exécute, après la réaction de l'agent, une sauvegarde (Save) de l'état de l'agent, une élimination (Pop) de la notification traitée de la queue de message locale (mqln) et une validation (Commit), de manière atomique, des différentes opérations effectuées ayant modifié soit l'état de l'agent soit l'état des queues de message.

Selon une autre particularité, chaque message comprend une horloge matricielle optimisée qui peut être lue par le moteur d'exécution de la machine à agents permettant ainsi de traiter les notifications selon leur ordre causal d'émission.

Selon une autre particularité, un message est un objet qui contient quatre informations qui sont l'identificateur de l'agent émetteur, l'identificateur de l'agent destinataire, une horloge et la notification.

Selon une autre particularité, la machine à agents gère la distribution à toutes les entités du réseau, ta fiabilité des opérations et l'ordonnancement des messages qui est établi par l'incrémentation d'une horloge logique matricielle.

Selon une autre particularité, le canal de message effectue les transactions séparées suivantes
- une notification émise par un agent est localement mémorisée dans une queue de message, à savoir soit la queue locale (mqln) pour les notifications adressées à un agent local, soit la queue externe (mqOut) pour un agent situé sur un autre serveur;
- à la fin de la réaction de l'agent, les deux queues sont sauvées sur le disque, ensemble avec l'agent réactif;
- une fonction (handleout) du réseau extrait tour à tour chaque notification de la queue externe (mqOut) et l'envoie au serveur d'agent cible;
- une fonction (handlein) du réseau reçoit les notifications des autres serveurs et les insère dans la queue locale (mqln) suivant l'ordre causal.

Selon une autre particularité, un serveur agent cible reçoit un message, il le mémorise sur sa couche de stockage (Storage) persistante, valide l'opération (commit) et confirme la réception du message au serveur source, sur réception de cette confirmation, le serveur source élimine le message de sa queue externe (mqOut).

Selon une autre particularité, un service de persistance externe assure l'atomicité des opérations ayant modifié soit l'état de l'agent soit l'état des queues de message (3, 4).

Selon une autre particularité, le moteur d'exécution
- prend une notification qui est dans la queue par la fonction Get,
- regarde à quel agent la notification s'adresse,
- charge l'agent correspondant à la notification (Load).
- fait réagir l'agent en appelant une opération de réaction (React), l'agent peut d'une part modifier son état en modifiant son image en mémoire, et d'autre part envoyer des notifications en s'adressant au canal qui va répartir la notification, les notifications étant alors routées vers une queue de message où elles sont mémorisées dans un ordre chronologique,
- si l'opération de réaction est exécutée, sauvegarde (Save) l'état de l'agent qui a été modifié par la réaction qu'il a exécutée, supprime (Pop) la notification qui a été traitée, et valide de manière atomique toutes les opérations qui ont été faites (Commit),
- repart dans la boucle de programme pour traiter une autre notification.

Selon une autre particularité, le procédé de transformation et d'acheminement de données s'effectue entre des serveurs d'agents présents sur des machines de sites de production et un serveur d'agent central présent sur la machine d'une base décisionnelle et fait appel à un agent particulier (Event) décrivant les événements spécifiques, dans lequel un automate d'état est implémenté.

Selon une autre particularité, l'automate d'état comprend différents états :
- un état None où l'événement n'est pas actif,
- une notification (Schedule) fait passer l'événement à l'état Wait où l'événement attend que sa condition d'activation devienne vraie, l'événement signale à lui-même une notification qui le fait passer à l'état Init ;
- un événement simple obtient directement l'état Run et exécute son action, un événement composé signale à ses sous-événements son accord pour qu'ils commencent et attend que le premier d'entre eux atteigne l'état Run pour passer lui-même à l'état Run ;
- un événement simple passe ensuite à l'état Done ou Fail selon l'état de son action, pour un événement composé, ce changement dépend des états d'exécution de tous les sous-événements ;
- un événement en exécution peut être tué en lui envoyant une notification (Eventkill), il passe alors à l'état Kill, marquant qu'il a été tué, et ensuite à l'état Stop quand il a en effet été tué ;
- un événement de terminaison, c'est-à-dire dans l'état Done, Fail ou Stop peut encore être effectué par le client en lui émettant une notification (Schelude), il est alors remis à zéro et passe à l'état Wait ; l'événement propage alors la notification à tous les sous-événements ; un événement répétitivement effectué et doté d'un état Done est automatiquement remis à zéro par l'agent Scheduler qui lui envoie une notification (Schelude) ;
- un événement dans l'état Fail ou Stop peut être effectué à nouveau sans être remis à zéro par envoi d'une notification (Eventrestart), quand cette condition redevient 'vrai', l'événement recommence au point à partir duquel il a été précédemment arrêté.

Selon une autre particularité, un fonctionnement nouveau peut être rajouté à l'architecture en ajoutant une classe d'agent qui dérive de la classe 'Event'.

Selon une autre particularité, trois catégories d'agent de type 'Event', 'SeqEvent', 'ParEvent', 'ComplexEvent' prennent d'autres opérations élémentaires de type 'Event' pour les exécuter respectivement de manière séquentielle, en parallèle, ou en prenant en compte les dépendances entre les différentes opérations.

D'autres particularités et avantages de la présente invention apparaîtront plus clairement à la lecture de la description ci-après faite en référence aux dessins annexés dans lesquels :
- la figure 1 représente l'architecture d'un serveur d'agent sur un site et l'algorithme du moteur d'exécution de la machine à agents ;
- la figure 2 représente l'automate d'états d'un agent 'Event' ;
- les figures 3, 4 et 5 représentent respectivement la classe 'Agent', la classe 'Channel' et la classe 'messageQueue'.

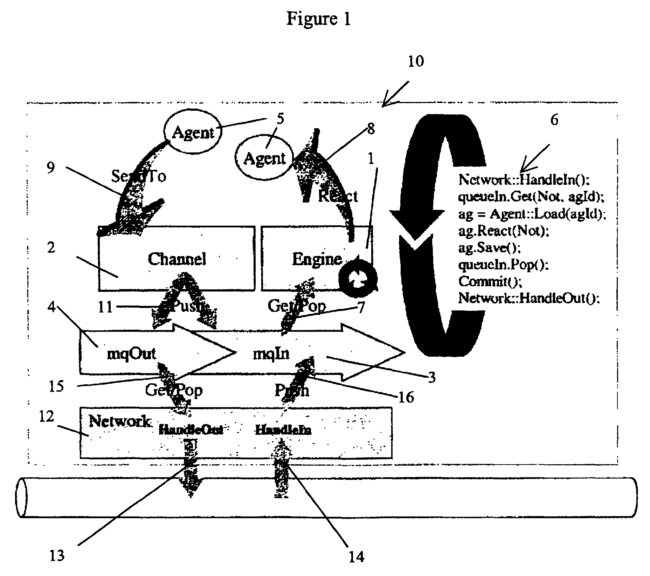

Schématiquement, sur chaque site de production, il existe une ou plusieurs machines constituées d'un serveur d'agents. Les communications entre les serveurs d'agents sont établies par un réseau, un composant Network par exemple. Dans chaque serveur d'agent, on définit une machine à agents avec au-dessus la possibilité de définir des agents, avec un certain modèle d'agents. Cette machine à agents gère un certain nombre de propriétés qui sont d'une part l'aspect atomique de la réaction d'un agent à une notification et d'autre part la délivrance des notifications suivant un ordre causal d'émission. La machine à agents comprend différentes entités. En référence à la figure 1, la machine à agents comprend un moteur d'exécution (1) (Engine), un canal (2) de communication ou bus de message (channel) associé au moteur d'exécution (1), le canal (2) possède deux queues, une queue locale (3) (mqln) et une queue externe (4) (mqOut). Le serveur d'agents (10) comporte aussi une couche de stockage (storage). Les queues (3, 4), le canal (2) et les agents (5) s'appuient sur la couche de stockage.

Tous les agents (5), le canal (2) de communication et le moteur d'exécution (1) de la machine à agents sont des objets C++ dans un processus UNIX. La persistance est réalisée en utilisant un DBMS (Data Base management System). La plupart des objets, et pas seulement les agents, peuvent être mémorisés dans la couche de stockage de persistance. Chaque objet possède un identificateur unique et persistant. Les objets suivent une interface générique pour être utilisés par des fonctions de service de persistance communes.

Les agents (5) sont des entités de programmation élémentaire et d'exécution. Les agents (5) sont autonomes pour obtenir la propriété d'extensibilité de la structure en pouvant ajouter et enlever facilement des agents dans l'architecture. Ils sont rendus autonomes en définissant parfaitement l'interface de ces agents. Ils sont autonomes aussi en terme de communication. Ils communiquent en utilisant des notifications et non par appel de procédure, ce qui permet d'ouvrir l'architecture. Un événement est représenté par une notification. Les notifications passent par le canal (2) et sont contrôlées par le moteur d'exécution (1) (Engine) de la machine à agents. Les notifications sont portées aux agents via le canal de communication (2) (Channel). Les agents (5) sont des objets persistants, leur état est fait de données qui existent en dehors de toutes structure d'exécution. Un agent (5) est une machine indépendante qui réagit aux notifications. Tous les agents sont indépendants et seuls les agents réactifs ont besoin d'être chargés dans la mémoire. On appelle "agent réactif" un agent qui vient de recevoir une notification et dont le comportement est imposé par la fonction 'React' de l'agent appelée par le moteur d'exécution (1) (Engine). Ces agents réactifs peuvent ensuite être replacés sur le disque à la fin de la boucle de programme du moteur d'exécution (1) qui sera décrit après. Chaque agent est un objet d'une classe et est identifié par un identificateur (Agentld) unique qui permet de le localiser. Un agent peut être créé sur un serveur à distance. L'entité de création est responsable de la création de l'identificateur. La structure de l'identificateur doit prendre en compte la localisation statique des agents pour permettre au système de faire suivre les notifications et une 'production' locale des identificateurs pour les agents à distance. L'identificateur d'un agent comprend trois parties qui sont l'identification du serveur d'agents accueillant l'agent de création, l'identification du serveur d'agents accueillant l'agent créé et une estampille, locale au serveur d'agent accueillant l'agent de création.

Les objets persistants sont séparés en quatre classes. Tous les objets possédant les mêmes propriétés ou la même politique d'attribution des identificateurs appartiennent à une classe. Une classe définie peut être réutilisée pour définir une sous-classe en lui ajoutant des propriétés spécifiques. Les sous-classes héritent des propriétés de la super classe. Un graphe d'héritage définit la hiérarchie des classes. Quatre classes de base sont ainsi définies, la classe 'globalObject', la classe 'localobject', la classe 'notification' et la classe 'agent'.

Les objets de la classe 'globalObject' représentent les données de configuration, définies par le client au moment de la configuration et partagées entre les différents événements. Deux principales catégories sont décrites, les hôtes dans la classe 'Host' et les classes dérivées, et les bases de données dans la classe 'DbConfig' et les classes dérivées. Un objet de la classe 'DbConfig' pointe toujours vers un objet de la classe 'Host'.

La classe 'localObject' a été définie pour apporter de la flexibilité dans la gestion de la persistance. L'interface pour la persistance impose les mouvements de la couche de stockage (storage) vers la mémoire et de la mémoire vers la couche de stockage de l'ensemble des objets, même si une partie des objets n'a pas changé pendant la réaction. Déclarer un membre d'un objet dans celle classe permet de gérer explicitement la persistance de ce membre, indépendamment de la persistance de l'objet en lui-même.

Les objets de la classe 'notification' représentent les messages échangés par les agents. La plupart des notifications sont relatives à la gestion des événements 'warehouse'.

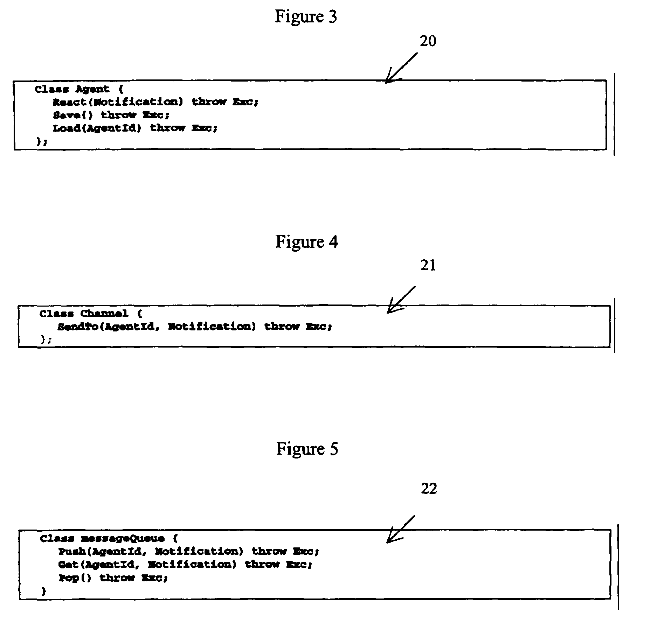

La classe agent représente les événements 'warehouse'. La classe d'objet 'Agent' définit l'interface générique pour tous les agents. La classe d'objet 'Agent' définit le comportement commun de tous les agents. Chaque agent est un objet de l'une des classes dérivant de la classe agent. La classe agent réalise un mécanisme ('swap-in/swap-out') qui permet de charger ou de trouver dans la mémoire principale les agents pour les activer et de décharger les agents non utilisés depuis un moment. Ceci est effectué par une classe 'AgentHashTable' qui maintient une liste des agents déjà en mémoire avec la date de leur dernier accès. Cette classe est réalisée en utilisant une table (Hashtable) avec l'identificateur d'agent en première position. Les agents peuvent être explicitement enlevés de la mémoire par une fonction 'Delete' qui les enlève de la table (Hashtable). En référence à la figure 3, la classe d'objet 'Agent' (20) définit deux fonctions, fonction 'Save' et fonction 'Load', qui sauve et charge l'état des objets sur et à partir de la mémoire auxiliaire. Les agents, identifiés par leurs identificateurs, sont chargés automatiquement par le moteur d'exécution (1). Le comportement réactif est implémenté par une fonction 'React', qui définit la réaction d'un agent quand il reçoit une notification. Celle fonction est appelée par le moteur d'exécution (1) de la machine à agents.

Un premier type d'agent 'Agenda' ou 'planifieur' (Scheduler) va gérer l'exécution des requêtes 'warehouse' dans le temps. Cet agent est activé par réception d'une notification (Schedule) (32). Cet agent réagit à cette notification en sélectionnant les agents qu'il doit réveiller par envoi d'une notification d'accord (AgreementScheduler). Il va gérer le temps et les alarmes, les agents vont pouvoir lui demander d'être 'réveillés' à une certaine date. Cet agent est présent seulement sur le serveur d'agent central de la base décisionnelle.

Un second type d'agent 'usine' (factory) est présent sur tous les serveurs d'agent et a la charge de créer des objets sur le serveur. Il permet de gérer la création des agents à distance.

Un troisième et quatrième types d'agent 'UnixEvent' et 'SigChld' permettent de gérer les processus UNIX. 'Sigchild' existe sur un serveur d'agent UNIX et attrape les signaux de terminaison des processus 'enfants'.

Un cinquième type d'agent 'Clientproxy' permet de transcrire en des notifications des commandes ordonnées par un client. Il existe seulement sur le serveur d'agent central et soutient la relation avec le client.

Une classe d'agent 'Event' décrit les événements 'warehouse'. Une requête 'warehouse' est composée de plusieurs tâches élémentaires appelées événements 'warehouse'. Dans cette architecture d'agent, chaque événement est exécuté et contrôlé par un agent séparé. Tous les événements 'warehouse' possèdent un comportement et des propriétés communes qui mènent à une définition plus précise d'un type d'agent spécifique au datawarehouse : l'agent Event. Il doit respecter une certaine interface et d'autre part un mode de fonctionnement. Comme tout agent, c'est une machine à états, mais ici on va définir les états. Un objet 'Event' diffère d'un objet 'Agent' par les attributs suivant :
- un événement a un nom et une description ;
- tous les événements qui forment une requête 'warehouse' sont organisés hiérarchiquement. La requête est identifiée par un identificateur de l'événement racine de la hiérarchie, tous les événements gardent l'identificateur de leurs parents et de leur requête.
- l'objectif d'un Event est d'accomplir une action. Le commencement de l'exécution de l'action est conditionné par la réception d'une série de notifications d'accords (Agreement) (34).
- un objet Event consomme des listes (tables) et produit des listes résultant d'une opération d'extraction, de transfert ou de transformation par exemple. Les tables produites sont établies avec la notification de terminaison de l'action de l'événement (ActionDone) (44), et sont représentées par des objets C++ dans la classe LocalObject.
- un objet Event est une machine à état, il maintient une variable d'état et rend ses changements d'états à ses parents par l'intermédiaire de notifications (StatusNotification) (45).
Deux principaux groupes d'événement peuvent être isolés. Une classe de base (DelegatingEvent) est définit pour tous les événements qui réalisent une opération élémentaire spécifique au datawarehousing : extraction, transfert, transformation, etc. Ces différentes opérations vont hériter de l'agent Event et donc de toutes les propriétés de cet objet. Une deuxième classe de base, de service (ComposedEvent) aide à structurer l'exécution d'une requête : exécution séquentielle, en parallèle, ou de manière plus complexe. Cette classe définit un comportement commun pour tous les événements composés tel que par exemple, la gestion de la liste des sous-événements : création, sauvegarde, restauration, suppression (create, save, restore, delete). Le dernier événement important est l'UnixEvent qui encapsule l'exécution d'une commande Unix.

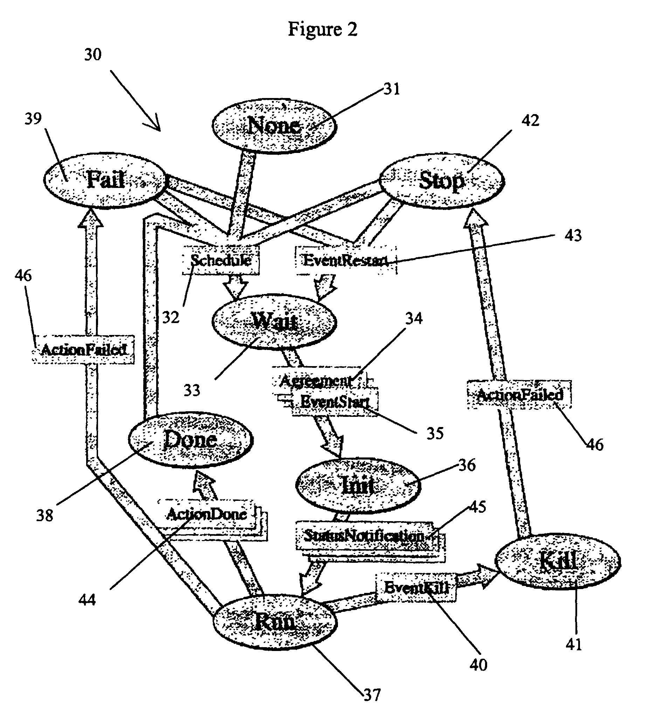

Les changements possibles d'états pendant l'exécution de l'événement sont représentés figure 2. Le graphe d'état ou automate d'état (30) est implémenté dans l'agent EVENT en C++ :
- l'état NONE (31) est l'état initial où l'événement n'est pas actif,
- une notification (Schedule) (32) fait passer l'événement à l'état Wait (33) où l'événement attend que sa condition d'activation devienne vraie (True). Cette condition dépend d'une série de notifications d'accords (Agreement) (34). Quand cette condition devient vraie, c'est-à-dire que tous les accords ont été reçus, l'événement signale à lui-même une notification (Eventstart) (35) pour commencer.
- sur réception de cette notification (Eventstart) (35), l'état est positionné sur Init.(36)
- un événement simple obtient directement l'état Run (37) et exécute son action. Un événement composé signale à ses sous-événements son accord pour qu'ils commencent et attend que le premier d'entre eux atteigne l'état Run (37) pour passer lui-même à l'état Run (37) (il attend que l'action soit vraiment commencée).
- un événement simple passe au statut Done (38) ou Fail (39) selon l'état de son action et sur réception d'une notification que l'événement se signale à lui-même (respectivement 44, 46). Pour un événement composé, ce changement dépend des états d'exécution de tous les sous-événements.
- Un événement en exécution peut être tué en lui envoyant une notification (Eventkill) (40), il passe alors à l'état Kill (41), marquant qu'il a été tué, et ensuite à l'état Stop (42) quand il a en effet été tué, sur réception d'une notification (46).
- un événement de terminaison, c'est-à-dire dans l'état Done (38), Fail (39) ou Stop (42) peut encore être effectué par le client en lui émettant une notification (Schelude) (32), il est alors remis à zéro et passe à l'état Wait (33). L'événement propage alors la notification à tous les sous-événements. Un événement répétitivement effectué et doté d'un état Done (38) est automatiquement remis à zéro par l'agent 'Scheduler' qui lui envoie une notification (Schelude) (32).
- un événement dans l'état Fail (39) ou Stop (42) peut être effectué à nouveau sans être remis à zéro par envoi d'une notification (Eventrestart) (43). Quand cette condition redevient 'vrai', l'événement recommence au point à partir duquel il a été précédemment arrêté.

Dans la classe 'Event', une fonction (Start) permet de changer d'état et de diffuser automatiquement le changement d'état à l'opération qui gère l'opération. La fonction 'Start' permet, simplement en l'appelant, d'envoyer automatiquement les notifications nécessaires et de changer d'état. La classe possède une implantation de base de réactions à un certain nombre de notifications. En particulier, il existe une procédure dans la classe de base Event pour passer de Wait (33) à Init (36). Un agent qui hérite de Event, c'est-à-dire qui fait partie d'une sous-classe de la classe 'Event', récupère cette gestion. Selon le mode standard, l'état passe en Init (36) puis en Run (37) puis en Done (38), de Done (38) l'état peut repasser en Wait (33). C'est le schéma classique. L'implantation de base est Wait (33), Init (36), Run (37). Dans des classes plus spécifiques, il faut gérer manuellement le passage d'Init (36) à Run (37). Il existe une implantation de base pour réagir à un signal de demande d'arrêt (40). Sur réception de cette notification de Kill (41), on va passer en état Kill (41) puis en état Stop (42). Cette implantation peut par exemple être chargée dans une sous-classe, on peut dans la sous classe donner une autre fonction qui va implémenter ce passage, éventuellement le séparer en deux étapes de Run (37) à Kill (41) puis de Kill (41) à Stop (42). Il existe donc une implantation de base de tous ces changements d'états. Quand on veut définir une classe particulière, on doit surcharger la classe Event et fournir une implantation à un certain nombre de fonctions en respectant les règles et chaque fonction, par exemple la fonction Start, doit forcément appeler le passage à l'état Run (37). Il existe donc une classe, des variables dans cette classe qui chacune contienne un des états et des fonctions de changements d'état, qui chacune vont faire le passage par exemple de Wait (33) à Run (37), de Run (37) à Done (38). Dans la classe Event, une implantation standard est offerte, elle permet de passer directement d'Init (36) puis à Run (37), mais une classe qui va surcharger doit fournir l'implantation de la fonction Start en mettant dans son code d'une part le passage à Init (36) puis le passage à Run (37). Mettre une nouvelle classe d'agent revient ainsi à hériter puis fournir des implantations de nouvelles fonctions, autrement dit, rajouter un fonctionnement nouveau à l'architecture, revient à ajouter une classe d'agent qui dérive de la classe Event.

Le processus de transfert de données est décomposé en tâches élémentaires qui vont passer dans les états décrits précédemment, l'exécution va ainsi progresser par étapes élémentaires. Chaque opération élémentaire doit satisfaire le graphe d'état. Quand par exemple un service est demandé à une opération élémentaire, l'opération va passer dans Wait (33) et Init (36), et la machine à agents (qui sera décrite après) garantit que l'opération arrivera à un moment donné dans l'état Done (38) ou dans l'état Fail (39) ou éventuellement si une demande d'arrêt (40) a été demandée dans l'état Stop (42). L'organisation et la synchronisation des tâches élémentaires font partie d'une bibliothèque. Trois classes particulières d'agent, 'SeqEvent', 'ParEvent' et 'ComplexEvent', héritant de la classe 'ComposedEvent' ont été créées. Un objet 'SeqEvent' exécute ses sous-événements dans un ordre séquentiel, il réagit à une notification 'EventStart' en envoyant son accord au premier de ses sous-événements. Quand celui-ci est terminé, il démarre le sous-événement suivant. Lorsque le dernier est terminé, il passe au statut Done (38). Si un des sous-événements échoue, l'objet 'SeqEvent' s'arrête et passe à l'état Fail (39). De la même façon, un objet 'ParEvent' exécute ses sous-événements en parallèle. Il réagit à la notification Eventstart en envoyant son accord à tous les sous-événements. Il attend qu'ils aient terminé et change d'état en fonction de leurs états de terminaison. Un Objet 'ComplexEvent' permet que des dépendances arbitraires soient fixées entre les sous-événements. Puisque chaque événement ou opération élémentaire ou chaque 'Event' doit respecter le graphe d'états, il est possible de construire un événement qui va manipuler des sous-événements d'un type que l'on ne connaît pas mais dont on sait qu'ils respectent ce graphe, pour les faire exécuter de manière séquentielle. Il est possible de lancer en parallèle deux opérations, par exemple deux extractions ne concernant pas les mêmes bases de données et pas les mêmes sites, de se resynchroniser sur la terminaison de ces deux opérations pour lancer une autre opération, de transformation par exemple. L'ajout de la gestion du parallélisme par exemple, tout en gardant la fiabilité de la machine à agents (qui sera décrite après) est possible grâce à l'architecture ouverte et extensible du processus. Ainsi différents services peuvent être ajoutés à la machine en ajoutant simplement une classe.

La machine à agents assure la diffusion des notifications, la transmission des notifications et la gestion de l'atomicité de l'ensemble. La machine à agents comprend différentes entités. En référence à la figure 1, la machine à agents comprend un moteur d'exécution (1) (Engine), un canal (2) de communication (Channel) associé au moteur d'exécution (1) (Engine), le canal (2) possède deux queues, une queue locale (3) (mqln) et une queue externe (4) (mqOut). Il existe des entités bien définies et le programme (6) du moteur d'exécution (1) met en oeuvre ces différentes entités.

L'interface du canal (2) de communication (Channel) est réalisée par la classe 'Channel'. Suivant la figure 4, la classe 'Channel' (21) définit une fonction (Sendto) qui envoie une notification à un agent identifié. L'objet 'Channel' est responsable de l'agent cible. L'objet 'channel' fournit les propriétés suivantes une notification acceptée par le canal (2) (Channel) sera tôt ou tard délivrée et deux notifications avec des agents source et cible identiques sont délivrées selon leur ordre d'émission.

Suivant la figure 5, la classe 'MessageQueue' (22) définit une fonction d'addition (Push) utilisée par l'objet 'Channel' pour additionner une notification à une queue, et deux fonctions (Get et Pop) utilisées par le moteur d'exécution (1).

Le moteur d'exécution (1) est réalisé par la classe 'Engine'. La classe 'Engine' est la pièce maîtresse de l'architecture. Cette classe 'Engine' procure une multiprogrammation des agents. L'architecture distribuée implique plusieurs serveurs d'agent marchant sur différentes machines. Chaque agent est attaché à seulement un serveur d'agent, les entités migrantes étant les notifications. Une des propriétés essentielles de la machine d'exécution dans un serveur d'agent est l'exécution transactionnelle d'un agent réagissant à une notification : soit toutes les actions, qui sont les notifications émises et les changements d'état des agents, sont effectuées soit toutes les opérations ne sont pas effectuées. Chaque objet de la classe 'Engine' est associé à un objet de la classe 'MessageQueue', définie quand l'objet 'Engine' est créé. Le moteur d'exécution (1) (Engine) réalise une boucle de programme (6) qui successivement prend les notifications de la queue de message locale (3), appelle et exécute la fonction de réaction (React) appropriée de l'agent cible. En référence à l'algorithme (6) du moteur d'exécution (1) (Engine) représenté figure 1,
- le moteur d'exécution (1) prend une notification qui est dans la queue locale (4) par la fonction Get.(7)
- le moteur d'exécution (1) regarde à quel agent la notification s'adresse.
- le moteur d'exécution (1) charge l'agent correspondant à la notification (Load).
- le moteur d'exécution (1) va faire réagir l'agent en appelant une opération de réaction (React) (8). L'agent peut d'une part modifier son état, c'est-à-dire modifier son image en mémoire, et d'autre part envoyer (9) des notifications, c'est-à-dire s'adresser au canal (2) qui va répartir (11) la notification. Les notifications sont alors routées vers une queue de message (3, 4) où elles sont mémorisées dans un ordre chronologique.
- si tout se passe bien, si l'opération de réaction est exécutée complètement, le moteur d'exécution effectue une sauvegarde (save) de l'état de l'agent qui a été modifié par la réaction qu'il a exécutée, une suppression (pop) dans la queue de message locale (3) de la notification qui a été traitée, et une validation de toutes les opérations qui ont été faites (Commit). Toutes ces opérations ont soit modifié l'état de la mémoire, soit l'état des queues de message (3, 4) et de l'horloge matricielle qui sera définie après.
- puis le moteur d'exécution (1) repart dans la boucle pour traiter une autre notification.

Ce processus est distribué sur tous les serveurs d'agents des machines. Le composant NetWork (12) a la charge d'établir la communication entre les serveurs d'agents. Quand le serveur d'agent s'initialise, les éventuels agents créés auparavant sont tous sur le disque en espace persistant. Quand le moteur d'exécution (1) voit qu'il doit faire réagir un agent particulier parce qu'il y a eu une notification vers cet agent, il va aller le mettre en mémoire, dans la mémoire du processus à partir éventuellement de l'image conservée sur le disque. C'est l'opération 'Load', mouvement du disque vers la mémoire.

Une partie de la réaction de l'agent source est de délivrer de nouvelles notifications aux autres agents dits agents cibles. L'envoi des notifications fait partie de la transaction du serveur d'agent source réagissant. L'éventuelle consommation de la notification fait partie de la transaction du serveur de l'agent cible réagissant. La transmission de la notification du serveur de l'agent source vers le serveur de l'agent cible ne fait pas partie de la réaction de l'agent mais est réalisée par le canal (2) qui effectue les transactions séparées suivantes :
- une notification émise par un agent par le canal (2) est localement mémorisée dans une queue de message, à savoir soit la queue locale (3) (mqln) pour les notifications adressées à un agent local, soit la queue externe (4) (mqOut) pour un agent situé sur un autre serveur.
- à la fin de la réaction de l'agent, les deux queues (3, 4) sont sauvées sur le disque, ensemble avec l'agent réactif Les changements dans l'agent et dans les queues de message (3,4) prennent place dans la même transaction, ils sont établis au même moment,
- une fonction 'handleout' du réseau Network extrait (15) tour à tour chaque notification de la queue externe (4) (mqOut) et l'envoie (13) au serveur d'agent cible,
- une fonction 'handlein' du réseau Network reçoit (14) les notifications des autres serveurs et les insère (16) dans la queue locale (3) (mqln) suivant l'ordre causal. Quand le serveur agent cible reçoit le message, il le mémorise sur sa couche de stockage (Storage) persistante, valide l'opération (commit) et confirme la réception du message au serveur source. Sur réception de cette confirmation, le serveur source élimine le message de sa queue externe (4) (mqOut). Le message est ainsi assuré d'avoir été mémorisé de façon persistante par le serveur d'agent.

Les opérations de sauvegarde de l'état de l'agent, de suppression de la notification traitée (Save, Pop) et de validation des notifications émises doivent être intimement liées. L'atomicité résulte de ces trois opérations. Il ne faut pas, par exemple, sauvegarder l'agent et laisser la notification dans la queue locale (3) pour ne pas traiter la notification s'il existe une panne entre les deux opérations. Cette partie doit être gérée de façon atomique. Pour assurer l'atomicité entre ces deux opérations, on s'appuie sur un service de persistance externe qui permet de sauver à la fois l'agent, la queue locale et la queue externe. L'ensemble est gardé dans le même service de persistance qui nous donne cette opération atomique. On fait des modifications, le service de persistance conserve l'ancienne version des fichiers et quand on appelle l'opération de validation 'commit' sur ce service de persistance, c'est le service de persistance qui assure que l'opération s'effectue de manière atomique. L'atomicité inclut les modifications dans l'agent mais aussi les messages qu'il a envoyés vers l'extérieur et le message qu'il a consommé. Trois choses sont exécutées de manière atomique.

Si un problème survient lors de la réaction, les changements dans la base de données sont annulés (Rollback). En fonction du type d'erreur, il peut être nécessaire d'effectuer des opérations supplémentaires pour resynchroniser la base de données et les objets de la mémoire et pour permettre de continuer le programme. Deux types d'erreurs peuvent apparaître. Les erreurs du premier type sont détectées dans le code de la source et signalées par une 'exception' en C++. Les erreurs sérieuses (deuxième type) mènent à un signal les faisant apparaître. Dans le premier cas, l'exception peut être traitée à tout moment, même partiellement. Deux cas peuvent être distingués selon l'origine de l'exception. Si l'exception a été soulevée pendant la réaction de l'agent, l'agent est marqué comme ayant échoué, les opérations sur la base de données sont annulées et la queue de message est remémorisée. Le moteur d'exécution (1) peut traiter la notification suivante. Sinon, l'exception représente soit un signal attendu, dans ce cas la notification correspondante est créée et envoyée, soit c'est l'apparition d'une erreur sérieuse. Dans ce cas le traitement d'un signal d'erreur dépend de la position dans la boucle où il a été signalé. Si l'erreur apparaît pendant la réaction de l'agent à une notification, alors il est traité de la même manière qu'une exception l'est à ce moment. Si l'erreur provient de l'analyse de la notification ou du chargement de l'agent cible alors la notification est ignorée.

L'algorithme (6) de la machine à agents gère la distribution des notifications à toutes les entités sur le réseau et la fiabilité de ces opérations, et surtout l'ordonnancement. On va s'assurer que les messages ont bien été délivrés aux agents destinataires selon l'ordre d'émission. La relation entre les notifications est établie par simple numérotation des messages, par incrémentation d'une horloge logique. Une horloge logique permet d'obtenir un certain nombre de propriétés (propriété de causalité du canal par exemple). Dans chaque message, une horloge matricielle est incluse et chaque fois qu'un message est reçu, une partie de l'algorithme va dans un premier temps lire l'emplacement de l'horloge.

Un message est un objet qui contient quatre informations : l'identificateur de l'agent émetteur, l'identificateur de l'agent destinataire, une horloge et la notification. S'il existe n sites, l'horloge est composée d'une matrice n x n, car il faut maintenir l'état de communication de chaque site avec chaque autre site. Chaque machine va essayer de maintenir sa propre vision des communications globales, même les communications entre deux autres machines. Une matrice nxn correspond à une information très volumineuse. Une optimisation des données transférées est effectuée. Une partie de l'algorithme d'émission calcule la part réellement utile de l'horloge et ne transfère que cette partie.

Ainsi l'invention apporte une propriété à la machine à agents, qui est une résistance aux pannes car un gros processus a été découpé en petit processus élémentaire. En particulier on l'applique au datawarehouse à la distribution du processus. Le processus de transformation et d'acheminement des données est décomposé en étapes élémentaires. Dans un processus distribué, plusieurs machines sont impactées et les risques de panne d'une machine ou panne de réseau sont importants. Le processus décomposé en étapes permet en particulier d'isoler un morceau, qui est la transmission de la notification d'une machine à une autre.

La machine à agents a été distribuée. Les machines à agent communiquent entre elles, les agents ne voient pas cette distribution puisqu'ils communiquent par notifications et s'adressent à leur machine à agents locale. La réaction d'un agent reste locale. La réaction atomique qui est de modifier l'état et d'envoyer d'autres notifications reste locale. Ainsi toutes les pannes réseaux n'influent pas sur cette réaction. De plus, la transmission des notifications est elle-même une opération atomique. Chaque notification envoyée est une opération atomique, ce qui permet de gérer les pannes réseau en conservant les notifications en attendant que la machine ou le réseau soit remis d'aplomb. Au niveau de la machine à agents, on va gérer les erreurs de transmission, de panne de site et panne de réseau.

Une notification est quelque chose d'asynchrone. Lorsqu'une notification est envoyée, le programme peut continuer de maniére asynchrone. La notification est envoyée, on a la certitude qu'elle sera reçue et que la conséquence du message que l'on a envoyé sera exécutée et on n'a pas à attendre le résultat exact. C'est ce qui correspond à la propriété d'atomicité et de délivrance des messages et d'ordre de délivrance des messages. En réordonnant les messages suivant leur ordre causal et avec la fiabilité de délivrance des messages, on a fait en sorte que l'émetteur va totalement pouvoir se reposer sur les propriétés apportées pour ne pas avoir à se resynchroniser, pour être sûr que les opérations vont pouvoir être exécutées dans le bon ordre. Ainsi la gestion des erreurs de données est enlevée du programme.

En garantissant cette fiabilité du réseau, cet ordonnancement au niveau de la machine à agents, on arrive à extraire un graphe d'état relativement simple, qui est facile à bien maîtriser puisqu'il ne peut comprendre que les erreurs applicatives. Le niveau événement (Agent Event) structure un peu les différents états dans lesquels on va passer, et va permettre en particulier de gérer les erreurs de niveau applicatives cette fois qui peuvent survenir à chaque étape. Les erreurs applicatives sont gérées à l'aide de l'automate d'états. En décomposant en opérations élémentaires (étape de transfert, de chargement), en ayant un automate qui réagisse correctement, dont on a la certitude qu'il réagit correctement, on va pouvoir identifier l'étape et recommencer uniquement cette étape.

L'agent Event est un agent spécifique au Datawarehousing. La machine à agents selon l'invention peut donc être utilisée dans le domaine du datawarehouse, en manipulant cet agent spécifique tel que défini dans l'invention. Bien entendu, la machine à agent peut être utilisée dans d'autres domaines, en se servant d'agents spécifiques à chacun de ces domaines. Par exemple, la machine à agent peut être utilisée dans le domaine du pare-feu (Netwall). Un pare-feu autorise ou interdit les connexions sur un réseau, toutes les informations concernant les actions qu'il effectue sont placées sur un journal, un fichier (Log), dont la taille augmente très vite. Le procédé selon l'invention peut être réécrit dans un autre langage, et être utilisé pour gérer ce fichier (Log) en utilisant des agents spécifiques au domaine du pare-feu (NetwallEvent). Ces agents spécifiques reprennent le modèle de changement d'état de l'agent 'Event' spécifique au datawarehouse, mais en étant adapté pour gérer des données de type fichier propre à l'application du pare-feu. Il est clair que d'autres modifications à la portée de l'homme du métier entrent dans le cadre de l'invention.

## Revendications

1. Procédé de transformation et d'acheminement de données entre des serveurs d'agents présents sur des machines et un serveur d'agent central présent sur une autre machine, caractérisé en ce qu'un serveur d'agents comprend des agents (5) autonomes qui communiquent par notifications, une couche de stockage (Storage) et une machine à agents comportant un moteur d'exécution (1) (Engine), un canal (2) de communication (Channel) et deux queues de message pour les notifications, une queue locale (3) (mqln) et une queue externe (4) (mqOut), et en ce que le moteur d'exécution (1) prend une notification dans la queue locale (3) (mqln), détermine et charge pour chaque notification l'agent correspondant, fait réagir l'agent à la notification, l'agent pouvant alors changer son état et/ou émettre des notifications vers le canal (2) de communication qui les mémorise dans la queue locale (3) (mqln) si elles sont adressées à un agent local et dans la queue externe (4) (mgOut) si elles s'adressent à un agent d'un autre serveur.

2. Procédé de transformation et d'acheminement de données selon la revendication 1, caractérisé en ce que le moteur d'exécution (1) (Engine) de la machine à agents exécute, après la réaction de l'agent, une sauvegarde (Save) de l'état de l'agent, une élimination (Pop) de la notification traitée de la queue de message locale (3) (mqln), et une validation (Commit), de manière atomique, des différentes opérations effectuées ayant modifié soit l'état de l'agent soit l'état des queues de message (3, 4).

3. Procédé de transformation et d'acheminement de données selon la revendication 1 ou 2, caractérisé en ce que chaque message comprend une horloge matricielle optimisée qui peut être lue par le moteur d'exécution (1) de la machine à agents permettant ainsi de traiter les notifications selon leur ordre causal d'émission.

4. Procédé de transformation et d'acheminement de données selon l'une des revendications précédentes, caractérisé en ce qu'un message est un objet qui contient quatre informations qui sont l'identificateur de l'agent émetteur, l'identificateur de l'agent destinataire, une horloge et la notification.

5. Procédé de transformation et d'acheminement de données selon l'une des revendications précédentes, caractérisé en ce que la machine à agents gère la distribution à toutes les entités du réseau, la fiabilité des opérations et l'ordonnancement des messages qui est établi par l'incrémentation d'une horloge logique matricielle.

6. Procédé de transformation et d'acheminement de données selon l'une des revendications précédentes, caractérisé en ce que le canal (2) de message effectue les transactions séparées suivantes:
- une notification émise par un agent est localement mémorisée dans une queue de message, à savoir soit la queue locale (3) (mqln) pour les notifications adressées à un agent local, soit la queue externe (4) (mqOut) pour un agent situé sur un autre serveur ;
- à la fin de la réaction de l'agent, les deux queues (3, 4) sont sauvées sur le disque, ensemble avec l'agent réactif ;
- une fonction (handleout) du réseau extrait (15) tour à tour chaque notification de la queue externe (4) (mqOut) et l'envoie (13) au serveur d'agent cible ;
- une fonction (handlein) du réseau reçoit (14) les notifications des autres serveurs et les insère (16) dans la queue locale (3) (mqln) suivant l'ordre causal.

7. Procédé de transformation et d'acheminement de données selon l'une des revendications précédentes, caractérisé en ce que, quand un serveur agent cible reçoit un message, il le mémorise sur sa couche de stockage (Storage) persistante, valide l'opération (commit) et confirme la réception du message au serveur source, sur réception de cette confirmation, le serveur source élimine le message de sa queue externe (4) (mqOut).

8. Procédé de transformation et d'acheminement de données selon l'une des revendications précédentes, caractérisé en ce qu'un service de persistance externe assure l'atomicité des opérations ayant modifiées soit l'état de l'agent soit l'état des queues de message (3, 4).

9. Procédé de transformation et d'acheminement de données selon l'une des revendications précédentes, caractérisé en ce que te programme du moteur d'exécution (1)
- prend une notification qui est dans la queue locale (3) par la fonction Get (7),
- regarde à quel agent la notification s'adresse,
- charge l'agent correspondant à la notification (Load).
- fait réagir l'agent en appelant une opération de réaction (React), l'agent peut d'une part modifier son état en modifiant son image en mémoire, et d'autre part envoyer des notifications en s'adressant au canal (2) qui va répartir la notification, les notifications étant alors routées vers une queue de message (3, 4) où elles sont mémorisées dans un ordre chronologique,
- si l'opération de réaction est exécutée, sauvegarde (Save) l'état de l'agent qui a été modifié par la réaction qu'il a exécutée, supprime (Pop) la notification qui a été traitée, et valide toutes les opérations qui ont été faites (Commit),
- repart dans la boucle de programme (6) pour traiter une autre notification.

10. Procédé de transformation et d'acheminement de données selon l'une des revendications précédentes, caractérisé en ce qu'il s'effectue entre des serveurs d'agents présents sur des machines de sites de production et un serveur d'agent central présent sur la machine d'une base décisionnelle et qu'il fait appel à un agent particulier (Event) décrivant les événements spécifiques, dans lequel un automate d'état (30) est implémenté.

11. Procédé de transformation et d'acheminement de données selon la revendication 10, caractérisé en ce que l'automate d'état (30) comprend différents états :
- un état None (31) où l'événement n'est pas actif,
- une notification (32) (Schedule) fait passer l'événement à l'état Wait (33) où l'événement attend que sa condition d'activation devienne 'vraie', l'événement signale à lui-même une notification (35) qui le fait passer à l'état Init (36) ;
- un événement simple obtient directement l'état Run (37) et exécute son action, un événement composé signale à ses sous-événements son accord pour qu'ils commencent et attend que le premier d'entre eux atteigne l'état Run (37) pour passer lui-même à l'état Run (37) ;
- un événement simple passe ensuite à l'état Done (38) ou Fail (39) selon l'état de son action, pour un événement composé, ce changement dépend des états d'exécution de tous les sous-événements ;
- un événement en exécution peut être tué en lui envoyant une notification (Eventkill) (40), il passe alors à l'état Kill (41)' marquant qu'il a été tué, et ensuite à l'état Stop (42) quand il a en effet été tué ;
- un événement de terminaison, c'est-à-dire dans l'état Done (38), Fail (39) ou Stop (42) peut encore être effectué par le client en lui émettant une notification (Schelude) (32), il est alors remis à zéro et passe à l'état Wait (33) ; l'événement propage alors la notification à tous les sous-événements ; un événement répétitivement effectué et doté d'un état Done (38) est automatiquement remis à zéro par l'agent 'Scheduler' qui lui envoie une notification (Schelude) ;
- un événement dans l'état Fail (39) ou Stop (42) peut être effectué à nouveau sans être remis à zéro par envoi d'une notification (Eventrestart) (43), quand cette condition redevient 'vrai', l'événement recommence au point à partir duquel il a été précédemment arrêté.

12. Procédé de transformation et d'acheminement de données selon la revendication 10 ou 11, caractérisé en ce qu'un fonctionnement nouveau peut être rajouté à l'architecture en ajoutant une classe d'agent qui dérive de la classe 'Event'.

13. Procédé de transformation et d'acheminement de données selon la revendication 12, caractérisé en ce que trois catégories d'agent de type 'Event', 'SeqEvent', 'ParEvent', 'ComplexEvent' prennent des opérations élémentaires de type 'Event' pour les exécuter respectivement de manière séquentielle, en parallèle, ou en prenant en compte les dépendances entre les différentes opérations.
